# EUROPÄISCHE PATENTSCHRIFT

(11) **EP 2 720 834 B1**
(45) Veröffentlichungstag und Bekanntmachung des Hinweises auf die Patenterteilung: **21.11.2018**
(21) Anmeldenummer: 12737503.8
(22) Anmeldetag: 13.06.2012
(51) Int. Cl.: B25J 9/04

(54) **VERFAHREN ZUM BETREIBEN EINES ROBOTERS UND ROBOTER**
METHOD FOR OPERATING A ROBOT AND ROBOT
PROCÉDÉ POUR FAIRE FONCTIONNER UN ROBOT ET ROBOT

(30) Priorität: 15.06.2011 DE 102011077546
(43) Veröffentlichungstag der Anmeldung: 23.04.2014
(73) Patentinhaber: Haostern GmbH, 13347 Berlin (DE)
(72) Erfinder: BRETT, Tobias, 12529 Schönefeld (DE); QUIEL, Holger, 10435 Berlin (DE)
(74) Vertreter: Gulde & Partner
(86) Internationale Anmeldenummer: PCT/EP2012/061164
(87) Internationale Veröffentlichungsnummer: WO 2012/171940

(56) Entgegenhaltungen:
- EP-A2- 0 913 236
- WO-A2-2005/065893
- JP-A- H08 118 269
- US-A1- 2010 150 688

## Beschreibung

Die Erfindung betrifft ein Verfahren zum Betreiben eines Roboters und den Roboter selbst. Ferner werden ein Translationsroboter, ein Robotersystem und ein Verfahren zum Betreiben des Robotersystems beschrieben (für sich allein betrachtet nicht Teil der Erfindung).

In den unterschiedlichsten industriellen Fertigungsprozessen werden heutzutage Roboter eingesetzt, welche entsprechend ihrer Anwendung unterschiedlichste Kinematiken aufweisen. Dabei werden häufig so genannte "Pick- and Place"-Aufgaben von Robotern übernommen, bei welchen Objekte vom Roboter an einem Ort ergriffen und an einem anderen Ort abgesetzt werden müssen. Dabei ist es wünschenswert, die Objekte (Güter) schnell zu greifen, zu transportieren und unter Einhaltung einer hohen Positioniergenauigkeit innerhalb möglichst kurzer Zeit am Zielort ablegen zu können. Weiterhin wünschenswert ist es, den Anteil von Leerfahrten des Roboters so gering wie möglich zu halten.

Aus dem Vorgenannten ergibt sich, dass der Roboter je nach Aufgabe mit den zu bearbeitenden Objekten (Gütern) in unterschiedlicher Weise in Kontakt tritt. Dieses In-Kontakt-Treten mit den Objekten wird durch den mindestens einen Effektor des Roboters realisiert, welcher beispielsweise ein Laser oder eine Greifvorrichtung sein kann. Ein Effektor kann aber auch eine sonstige Vorrichtung sein, durch welche der Roboter auf das zu bearbeitende (oder zu transportierende) Objekt in geeigneter Weise einwirkt.

Bei dem so genannten SCARA-Roboter, welcher beispielsweise aus US 4,702,668 bekannt ist, werden zur Positionierung des Effektors zwei horizontal operierende Arme, welche drehbeweglich miteinander verbunden sind, verwendet. Dabei ist ein erster Arm an seinem ersten Ende drehbeweglich mit einer Basis und einem rotatorischen Antrieb verbunden, wobei das zweite Ende des ersten Armes drehbeweglich mit einem Ende des zweiten Armes verbunden ist. Die gemeinsame Drehachse der beiden Arme verfügt ebenfalls über einen zweiten rotatorischen Antrieb. Am anderen Ende des zweiten Armes ist der Effektor angeordnet. Mittels der mindestens zwei rotatorischen Antriebe wird der Effektor des Roboters mittels bekannter Methoden, wie beispielsweise "Point-To-Point", "Synchro-Point-To-Point" oder "Continuous Path" positioniert. Durch die bewegten Antriebe, welche für die Aufnahme von hohen Bearbeitungskräften ausgelegt sein müssen, ist das Trägheitsmoment des SCARA-Roboters relativ hoch.

"Pick- and Place-Aufgaben" mit verbundener 180°-Drehung des gesamten Arms werden beim SCARA-Roboter aufgrund der vorgenannten Nachteile häufig umgangen, indem ein größer dimensionierter SCARA-Roboter gewählt wird, um die zu bedienenden Felder (Feld, aus dem Objekte entnommen und Feld, in das Objekte gestellt werden) direkt nebeneinander setzen zu können.

Aus US 6,275,748 B1 und US 6,593,718 B1 sind Roboter mit drei starren, beweglich angeordneten Armen bekannt, wobei die drei Drehachsen, über welche die Arme gehalten werden, jeweils rotatorische Antriebe aufweisen. Insbesondere weisen der erste und der zweite Arm sowie der zweite und der dritte Arm je eine gemeinsame Drehachse auf. Der am Ende des dritten Armes angeordnete Effektor kann ebenfalls mittels bekannter Methoden, wie beispielsweise "Point-To-Point", "Synchro-Point-To-Point" oder "Continuous Path" positioniert werden. Dieses Konzept ähnelt dem des SCARA-Roboters, nur dass statt der zwei Arme nun drei Arme vorgesehen sind.

Weiterhin ist der so genannte Delta-Roboter bekannt, welcher eine hauptsächlich parallele Kinematik und ein relativ geringes Gewicht aufweist, wodurch er extrem kurze Zykluszeiten, welche im Bereich von 0,4 Sekunden liegen, erreichen kann. Dieser Delta-Roboter besteht aus einer unbeweglichen Basis, welche an einer Decke montiert wird. Weiterhin weist der Delta-Roboter vier Arme sowie vier (rotatorische) Antriebe auf. Drei Arme, bestehend aus Ober- und Unterarm, verbinden die Basis mit der bewegten Plattform am unteren Ende, welche den Effektor trägt. Die Armgeometrie hält die Plattform dabei stets parallel zur Basis. Die Parallelkinematik der Arme ermöglicht eine hohe Steifigkeit und Beschleunigung. Der vierte Arm dient zur Übertragung eines Drehmoments und ermöglicht eine Rotation des Effektors. Aufgrund der zwingenden Deckenmontage des Delta-Roboters sind seine Einsatzgebiete eingeschränkt. Weiterhin ragen die drei Arme in relativ vielen Arbeitspositionen weit über den Effektor hinaus. Dadurch ist es dem Delta-Roboter nicht möglich, in Arbeitsräume einzudringen, welche lediglich einen seitlichen Zugang aufweisen. Selbst bei Annäherung an eine Seitenwand ist der Delta-Roboter nicht einsetzbar. Dies ist nachteilhaft, da das (seitliche) Entnehmen von Werkstücken aus Maschinen in vielen Montage- oder Bearbeitungsprozessen Verwendung findet, bei dem die Orientierung der Werkstücke einmalig durch einen Roboter bzw. ein Robotersystem sichergestellt wird, um diese definierte örtliche Lage in allen Folgeprozessen beibehalten zu können. Für solche Aufgaben kann der Delta-Roboter aufgrund der vorgenannten Nachteile nicht eingesetzt werden.

WO 2005065893 A2 offenbart einen Roboter mit mindestens einem linearen Vertikalantrieb und einer Basis, welche eine erste, vertikal angeordnete Drehachse mit einem ersten rotatorischen Antrieb aufweist. Die Drehachse ist fest mit einem ersten starren, im Wesentlichen horizontal angeordneten Element verbunden, welches drehbeweglich über eine zweite, vertikal angeordnete Drehachse mit einem zweiten, im Wesentlichen horizontal angeordneten starren Element verbunden ist. Die zweite Drehachse ist von der ersten Drehachse beabstandet angeordnet und weist einen zweiten rotatorischen Antrieb auf. Das zweite starre Element ist über eine dritte Drehachse drehbeweglich mit einem dritten, im Wesentlichen horizontal angeordneten starren Element verbunden. Die dritte Drehachse ist von der zweiten Drehachse beabstandet angeordnet und weist einen dritten rotatorischen Antrieb auf. Das dritte starre Element ist mit einem Effektor verbunden. Der mindestens eine lineare Vertikalantrieb ist mit der Basis, dem Effektor oder einer der Drehachsen verbunden. Der dritte rotatorische Antrieb weist ein Nennabtriebsmoment kleiner oder gleich 50% des Nennabtriebsmoment des zweiten rotatorischen Antriebs auf.

Der vorliegenden Erfindung liegt die Aufgabe zu Grunde, einen Roboter und ein Verfahren zum Betreiben dieses Roboters zur Verfügung zu stellen, mit denen in energieeffizienter, kostengünstiger und zeitoptimierter Weise Transportgut transportiert werden kann, wobei das Aufnehmen und Ablegen bzw. Sortieren des Transportgutes vom Transport umfasst sein soll.

Zur Lösung der Aufgabe wird erfindungsgemäß ein Verfahren zum Betreiben eines Roboters zur Verfügung gestellt, der eine Gliederkette mit wenigstens zwei Koppelgliedern umfasst, von denen ein erstes Koppelglied an einem um eine erste Drehachse drehbaren angetriebenen Kurbelglied in einer zweiten Drehachse drehgelenkig angeschlossen ist, und ein zweites Koppelglied in einer dritten Drehachse drehgelenkig an das erste Koppelglied angeschlossen ist, wobei an der zweiten Drehachse ein Antrieb für das erste Koppelglied angeordnet ist und das zweite Koppelglied an seinem, dem ersten Koppelglied gegenüberliegenden Endbereich einen Effektordrehpunkt aufweist. Das Verfahren ist derart ausgestaltet, dass das Kurbelglied und das erste Koppelglied derart angetrieben werden, dass der Effektordrehpunkt während der Drehung des Kurbelgliedes in einem bestimmten Winkelbereich in einer Ruheposition verweilt, wobei direkt nach Erreichen der Ruheposition durch den Effektordrehpunkt zur Verkürzung der Verweilzeit des Effektordrehpunktes in der Ruheposition mittels des Antriebes an der zweiten Drehachse ein Drehmoment auf das erste Koppelglied aufgebracht wird, welches in der Zeitspanne der gewünschten Verweildauer maximal 5% des Drehmomentes beträgt, welches zur Realisierung eines Verweilens des Effektordrehpunktes mit ungekürzter Verweildauer notwendig wäre. Am Effektordrehpunkt kann ein Endeffektor wie z. B. ein Greifer oder Sauger angeschlossen sein. Der Effektordrehpunkt ist somit die Position einer Drehachse eines Greifers oder Saugers. Es soll zur Verkürzung der Verweilzeit des Effektordrehpunktes in der Ruheposition zur Erreichung einer Verweildauer von z. B. 0,03 Sekunden in diesem Zeitfenster der Bereich des Momentenverlaufes, welcher zur Erzeugung einer ungekürzten bzw. maximalen Verweildauer notwendig wäre, gewählt werden, der den geringsten Dehmomentenbetrag aufweist. Dieses begrenzte bzw. beschnittene Drehmoment wird durch den Antrieb an der zweiten Achse auf das erste Koppelglied aufgebracht, und zwar direkt nach Erreichung der Ruheposition durch den Effektordrehpunkt. Im Gegensatz zu einem Betrieb des Roboters mit ungekürzter Verweildauer, d. h. bei einer Verweildauer, bei der bei bestimmten Drehgeschwindigkeits- und Massenverhältnissen des Effektordrehpunktes bzw. des Endeffektors dieser ohne Beaufschlagung der zweiten Drehachse mit einem Drehmoment in der Ruheposition bleiben würde (bei Antrieb lediglich des Kurbelgliedes und/oder des ersten Kurbelgliedes), wird durch das erfindungsgemäße Verfahren erreicht, dass die Verweildauer stark verkürzt wird und zum Betrieb des Roboters lediglich ein sehr geringes Drehmoment auf das erste Koppelglied aufgebracht werden muss. Damit ist das Verfahren energieeffizient und mit nur einem relativ gering dimensionierten Antrieb an der zweiten Drehachse durchführbar.

Das zweite Koppelglied weist an seinem dem ersten Koppelglied gegenüberliegenden Endbereich, vorzugsweise im gegenüberliegenden Stoßmittelpunkt, den Effektordrehpunkt auf.

Das erfindungsgemäße Verfahren ist vorteilhafterweise derart durchführbar, dass die Antriebe an der ersten Drehachse und an der zweiten Drehachse derart betrieben werden, dass der Effektordrehpunkt von einer ersten Ruheposition zu einer zweiten Ruheposition bewegt wird, wobei der Effektordrehpunkt und die dritte Drehachse in wenigstens 80% ihrer jeweiligen Wegstrecke auf jeweils gegenüberliegenden Seiten einer theoretischen linearen Verbindung zwischen der ersten Ruheposition und der zweiten Ruheposition bewegt werden. Die erste Ruheposition und die zweite Ruheposition liegen sich im Bezug zur ersten Drehachse im Wesentlichen diametral gegenüber. Es ist somit ein sogenannter gestreckter Innenschwung durchführbar, bei dem eine nahezu lineare Bewegung des Effektordrehpunktes realisiert wird, deren Weglänge circa 11/10 der Länge der theoretischen linearen Verbindung zwischen der ersten Ruheposition und der zweiten Ruheposition beträgt.

Dadurch, dass erfindungsgemäß die Verweilzeit stark verkürzt ist, hat die kinematische Kette des Roboters im Vergleich zum Betrieb mit einer ungekürzten Verweildauer nicht mehr das Bestreben, einen sogenannten gestreckten Außenschwung durchzuführen, bei dem der Effektordrehpunkt im Wesentlichen kreisbogenförmig um die erste Drehachse herumgeschwenkt wird. Zur Realisierung eines solchen Außenschwunges nach gekürzter Verweildauer wäre relativ viel Energie zur Aufbringung von Drehmomenten an den Drehachsen notwendig. Der Außenschwung weist außerdem den Nachteil eines relativ großen Raumbedarfs auf. In der vorteilhaften Ausgestaltung des erfindungsgemäßen Verfahrens ist somit vorgesehen, dass statt des Außenschwunges nach gekürzter Verweildauer in einer Ruheposition der Effektordrehpunkt den sogenannten gestreckten Innenschwung durchführt, bei dem die Antriebe an der ersten Drehachse und einer zweiten Drehachse relativ wenig Energie benötigen.

In Abhängigkeit von den Drehgeschwindigkeits-, Drehbeschleunigungs- und Massenverhältnissen am Roboter sowie in Abhängigkeit von der gewünschten Positionierungsgenauigkeit in den Ruhepositionen kann das Verfahren derart ausgestaltet sein, dass zur Realisierung der Bewegung des Effektordrehpunktes von der ersten Ruheposition zur zweiten Ruheposition auch ein Antrieb an der dritten Drehachse zur Bewegung des zweiten Koppelgliedes angetrieben wird.

Am Effektordrehpunkt kann drehbar in einer vierten Drehachse ein drittes Koppelglied angeschlossen sein, an dem ein Endeffektor angeordnet ist, wobei bei der Bewegung des Effektordrehpunktes von der ersten Ruheposition zur zweiten Ruheposition der Endeffektor derart geschwenkt wird, dass die Beschleunigung an einem Endbereich des Endeffektors geringer ist als die Beschleunigung des Effektordrehpunktes. Das Schwenken des Endeffektors erfolgt zur Vergleichmäßigung der Beschleunigungsphase zumindest eines Abschnittes der Bewegung von einer ersten Ruheposition zu einer zweiten Ruheposition, wobei die vergleichmäßigte Beschleunigung positiv oder auch negativ sein kann. Das dritte Koppelglied weist dabei an der vierten Drehachse eine drehbar angeordnete Auskragung auf, so dass der Endbereich des dritten Koppelgliedes in einer Kreisbahn um diese vierte Drehachse schwenken kann. Der Endbereich des dritten Koppelgliedes ist somit der Bereich des dritten Koppelgliedes, der den maximalen Abstand zur vierten Drehachse aufweist. Ausgehend von einer Situation, in der das dritte Koppelglied winklig zur Bewegungsbahn am Beginn der Bewegung des Effektordrehpunktes von der ersten Ruheposition zur zweiten Ruheposition ausgerichtet ist, wird der Winkel zwischen dem dritten Koppelglied und der Bewegungsbahn vergrößert, so dass der je Zeiteinheit vom Effektordrehpunkt zurückgelegte Weg größer ist als der in der selben Zeiteinheit vom Endbereich des dritten Koppelgliedes zurückgelegte Weg. Diese Bewegung sind solange durchführbar, bis eine gestreckte Anordnung des zweiten und des dritten Koppelgliedes erreicht wird.

Des Weiteren wird erfindungsgemäß ein Roboter zur Verfügung gestellt, der eine Gliederkette mit mindestens zwei Koppelgliedern umfasst, von denen ein erstes Koppelglied an einem um eine erste Drehachse drehbaren angetriebenen Kurbelglied in einer zweiten Drehachse drehgelenkig angeschlossen ist, und ein zweites Koppelglied in einer dritten Drehachse drehgelenkig an das erste Koppelglied angeschlossen ist, wobei an der zweiten Drehachse ein Antrieb für das erste Koppelglied angeordnet ist und das zweite Koppelglied an seinem dem ersten Koppelglied gegenüberliegenden Endbereich einen Effektordrehpunkt aufweist, und wobei der Roboter eine Steuerungseinrichtung umfasst, mit der die Antriebe des Kurbelgliedes und des ersten Koppelgliedes derart steuerbar sind, dass der Effektordrehpunkt während der Drehung des Kurbelgliedes in einem bestimmten Winkelbereich in einer Ruheposition verweilt. Kennzeichnend ist vorgesehen, dass der Roboter zur Durchführung des erfindungsgemäßen Verfahrens eingerichtet ist. Zur Realisierung der Drehbewegungen der einzelnen Glieder relativ zueinander sind selbstverständlich zwischen den Kurbel- bzw. Koppelgliedern Drehgelenke angeordnet.

Das zweite Koppelglied weist an seinem dem ersten Koppelglied gegenüberliegenden Endbereich, vorzugsweise im gegenüberliegenden Stoßmittelpunkt, den Effektordrehpunkt auf.

Vorteilhafterweise ist vorgesehen, dass am Effektordrehpunkt drehbar in einer vierten Drehachse ein drittes Koppelglied angeschlossen ist, an dem ein erster Endeffektor angeschlossen ist. Das dritte Koppelglied umfasst somit eine um die vierte Drehachse als Auskragung ausgebildete Koppel bzw. Schwinge. Vorzugsweise ist an die dritte Drehachse ein Antrieb zur Drehung des dritten Koppelgliedes angeschlossen.

Zur Verdopplung der Transportkapazität kann vorgesehen sein, dass am Effektordrehpunkt drehbar in der vierten Drehachse ein viertes Koppelglied angeschlossen ist, an dem ein zweiter Endeffektor angeordnet ist.

Das heißt, dass an dem sogenannten Stoßmittelpunkt, welcher dem Effektordrehpunkt entspricht, zwei Koppelglieder angeschlossen sein können, die in einer Ausstattung mit Endeffektoren als sogenannte Doppelgreifer funktionieren können.

Vorzugsweise ist vorgesehen, dass das dritte Koppelglied und das vierte Koppelglied jeweils an koaxial zur vierten Drehachse angeordneten Antriebswellen angeordnet sind. Das heißt, dass die Längsachsen bzw. Drehachsen der Wellen in der vierten Drehachse liegen. Wenigstens eine der Antriebswellen kann dabei als Hohlwelle ausgestaltet sein, so dass die Antriebswellen koaxial angeordnet werden können. Durch die Drehung der Antriebswellen können die Endeffektoren um die vierte Drehachse geschwenkt werden.

Wenigstens einer der Endeffektoren kann an seinem Endbereich ein um eine Achse drehbares Handhabungsmittel aufweisen, wobei dieses Handhabungsmittel mit einer Antriebseinheit verbunden ist, dessen Antriebsachse parallel zur vierten Drehachse verläuft. Das Handhabungsmittel kann z. B. ein Saugnapf oder ein Greifer sein, der mittels eines Getriebes, welches z. B. ein Zugmittelgetriebe sein kann, drehbar ist.

Bei Ausgestaltung des dritten Koppelgliedes und vierten Koppelgliedes mit koaxial angeordneten Antriebswellen ist vorteilhafterweise vorgesehen, das zumindest eine der Antriebswellen axial verschiebbar ist. In besonders günstigen Ausgestaltungen sind beide Antriebswellen axial verschiebbar. Eine definierte Verschiebung ist z. B. mittels Schraubgetrieben realisierbar.

Weiterhin kann der Roboter zumindest ein Zahnradgetriebe umfassen, mit dem zumindest eine der Antriebswellen eines Endeffektors antreibbar ist. Zu diesem Zweck kann an der Antriebswelle eine Außenverzahnung angeordnet sein, die mit einem Zahnrad an einer Nutwelle kämmt, die wiederum durch eine Antriebseinheit antreibbar ist und sich in ihrer axialen Position der jeweiligen axialen Position der Antriebswelle anpassen kann.

Es wird weiterhin ein Translationsroboter zur Verfügung gestellt (für sich allein betrachtet nicht Teil der Erfindung), der eine Gliederkette mit einem ersten Koppelglied aufweist, welches an ein um eine erste Drehachse drehbar angetriebenes Kurbelglied in einer zweiten Drehachse drehgelenkig angeschlossen ist. Ein Endeffektor ist drehbar in einer dritten Drehachse als ein zweites Koppelglied an das erste Koppelglied angeschlossen. Das Kurbelglied ist in einem translatorischen Freiheitsgrad verschiebbar. Der translatorische Freiheitsgrad ist vorzugsweise die Richtung der Drehachse des Kurbelgliedes. Gegebenenfalls kann der Translationsroboter auch zwei der genannten Gliederketten in mehreren Ebenen übereinander aufweisen.

In einer Ausführungsform stellt d ie auch als Basisachse bezeichnete erste Drehachse eine vertikal ausgerichtete und fixierte Gewinde-Nut-Spindel (z.B. 2 Meter Länge) dar. Eine Nutmutter (nur für vertikale Bewegung) und eine Mutter (nur für Spiralbewegung) sind mit einem fixen Abstand zueinander auf der Spindel montiert.

Die Mutter ist mit einem Servomotor ausgestattet, der den Leistungsantrieb realisiert.

Ein horizontal ausgerichteter Roboterarm mit den zwei Koppelgliedern und einem Greifer bzw. Endeffektor ist mit dem Aktionsmodul (Mutter-Nutmutter-Verbund) durch ein Lager verbunden. Damit ist der Arm grundsätzlich vom Aktionsmodul hinsichtlich der Rotation entkoppelt. Allerdings besteht die Möglichkeit, den Arm gezielt mit Mutter, Nutmutter oder "nicht" in Eingriff zu bringen.

Der Eingriff erfolgt durch vertikale Aktorik und vertikale Federn. In Eingriff wird jeweils eine Zahnradpaarung gebracht, die in vertikaler Richtung zeigt und in Richtung der ersten Drehbzw. Spindelachse angeordnet ist. Hierdurch führt der Arm entweder eine freie Rotationsbewegung (ggf. mit Hubanteil vom Aktionsmodul) aus oder im Eingriff mit der Mutter eine Spiralbewegung oder im Eingriff mit der Nutmutter eine Hubbewegung aus.

Zwischen den Gliedern des Armes befindet sich eine vertikale, zweite Drehachse (horizontal drehend), die über das selbe Verzahnungsprinzip in Eingriff oder nicht in Eingriff gebracht werden kann. Die Verbindung des Endeffektors mit dem zweiten Koppelglied erfolgt ebenfalls mit einer solchen "Eingriffsachse" oder einer konventionellen Achse, oder keiner Achse.

Jeweils ein Element der Zahnradpaarung weist eine Besonderheit auf. Es verfügt über die Möglichkeit, die Verzahnung durch einen Miniantrieb (Piezoantrieb, linear oder rotativ) präzise um weniger als einen Zahn zu verdrehen. Die Genauigkeit im Bereich von Servomotoren oder niedriger. Gelangen zwei Zahnräder in Eingriff, so werden dennoch keine relevanten Kräfte über diesen Miniantrieb übertragen, sondern die Kräfte werden über eine Reibkupplung übertragen, die kurz vor dem Eingriff der Zahnräder selbst zum Eingriff kommt und die Freiheitsgrade des Minimotors aufhebt. Die Reibkraft wird durch die vertikalen Federn aufgebracht. Vertikale Eingriffskräfte werden durch einfache Linearantriebe, z.B. Pneumatikzylinder aufgebracht.

Bei geringer Relativgeschwindigkeit der Zahnradpaare der Eingriffsachsen kann diese Achse somit präzise in Eingriff gebracht bzw. gestoppt werden und anschließend Momente übertragen, ohne den Drehwinkel zu verändern.

Mit der Erfindung der Eingriffsachsen wird das Problem unteraktuierter Manipulatoren gelöst, dass unmittelbar vor dem Stillstand die Steuerbarkeit durch den Wegfall der Systemdynamik aufgehoben wird. Aus der Achsanordnung resultiert ein zylindrischer Arbeitsraum.

Befindet sich zwischen Endeffektor und dem zweitem Koppelglied eine Eingriffsachse, so kann der Endeffektor um so besser rotieren, je weiter sein Schwerpunkt vom Drehpunkt der Eingriffsachse entfernt liegt. Das System funktioniert daher besonders gut, wenn die Trägheit einer Nutzlast hinzukommt, die z.B. länglich ist und deren Schwerpunkt somit ebenfalls weit von der Endeffektor-Eingriffsachse entfernt liegt.

Ein bevorzugtes Anwendungsgebiet des Translationsroboters stellt die Lagerhaltung dar, wie z.B. das Be- und Entladen von Paletten (insbesondere Euro-Paletten) oder von Pufferlagern, die z.B. Form eines Smart-Autotowers (Smart-Center-Prinzip) aufweisen. Euro-Palettierung stellt eine millionenfache Anwendung dar. Es erscheint besonders vorteilhaft, diese kostengünstig dezentral bei geringer Geschwindigkeit durchzuführen. Der Betrieb des Translationsroboters ist insbesondere dann effizient, wenn die Masse des jeweils zu bewegenden Gegenstandes sowie die Anordnung seines Schwerpunktes in die Auslegung und Steuerung des Translationsroboters mit einbezogen werden kann.

Somit wird ein Translationsroboter zur Verfügung gestellt, der nur einen Leistungsantrieb aufweist, besonders günstig zu bauen ist, einen großen Arbeitsraum aufweist und hohe Genauigkeiten erreicht.

Außerdem wird ein Robotersystem zur Verfügung gestellt (für sich allein betrachtet nicht Teil der Erfindung), welches als einen ersten Roboter einen erfindungsgemäßen Roboter sowie weiterhin einen Translationsroboter aufweist.

Der Vorteil des Robotersystems liegt insbesondere darin, dass durch die Zusammenwirkung des ersten Roboters und des Translationsroboters Transportaufgaben in unterschiedlichen Ebenen und wesentlich mehr Freiheitsgraden erledigt werden können, als es mit nur einem der genannten Roboter möglich wäre. Vorteilhafterweise kann mit dem ersten Roboter eine Tablett-Beschickung vorgenommen werden und mit dem Translationsroboter1 eine Regal-Beschickung.

Es wird außerdem ein Verfahren zum Betreiben des Robotersystems zur Verfügung gestellt (für sich allein betrachtet nicht Teil der Erfindung), bei dem mittels des Translationsroboters wenigstens ein Transportgut derart platziert wird, dass es sich im Bereich der Ruheposition des ersten Roboters befindet, und das Transportgut in dieser Position vom ersten Roboter aufgenommen wird, oder bei dem ein Transportgut im Bereich der Ruheposition vom ersten Roboter platziert wird und vom Translationsroboteraufgenommen wird. Die Zielzone des ersten Roboters ist relativ klein, das heißt, dass der Flächenbereich, in dem erfindungsgemäß energieeffizient eine Ruhephase bzw. Nullraumbewegung realisierbar ist, relativ klein ist. Das Verschieben dieser Zielzone wäre mit einem hohen Energie- und Einrichtungsaufwand verbunden. Innerhalb der Zielzone bzw. des Zielbereiches ist jedoch eine sehr genaue Positionierung mit dem ersten Roboter möglich. Der Translationsroboter weist ebenfalls eine relativ geringe Positionsgenauigkeit auf. Allerdings lassen sich über eine Positionsermittlungseinrichtung sehr genau die jeweiligen Positionen eines Handhabungselementes bzw. Endeffektors des Translationsroboters ermitteln. Diese Ermittlung kann messtechnisch und/oder rechnerisch erfolgen. Die Positionsgenauigkeit des Translationsroboters reicht aus, um das Transportgut innerhalb der Zielzone bzw. des Zielbereiches des ersten Roboters ausreichend genau zu positionieren, dass dieser das Transportgut aufnehmen kann, bzw. umgekehrt, dass der Translationsroboterein Handhabungsmittel ausreichend exakt in dem Zielbereich des ersten Roboters positionieren kann, so dass vom ersten Roboter das Transportgut aufgenommen werden kann. Mittels der Positionsermittlungseinrichtung kann die jeweilige Position des Handhabungselementes des Translationsrobotersan den ersten Roboter übermittelt werden und somit das Anfahren dieser Position durch den ersten Roboter ermöglicht werden. Das heißt, dass durch die Kombination des ersten Roboters und des Translationsroboters die jeweiligen Nachteile der einzelnen Roboter kompensiert werden können, in dem durch den Translationsroboter eine relativ grobe Positionierung vorgenommen wird und eine Feinabstimmung im Zusammenwirken der Roboter durch den ersten Roboter realisiert wird. Ein energieeffizienter Betrieb des Robotersystems ist dadurch realisierbar, dass ein Antrieb des Translationsroboters lediglich in dessen erster Drehachse erfolgt, so dass das Kurbelglied rotiert. Dabei werden Drehbewegungen in der zweiten und/oder dritten Drehachse mittels Bremsen fixiert bzw. die jeweilige Fixierungswirkung beendet und somit die Drehbewegung freigegeben.

Die Erfindung wird im Folgenden anhand der in den beiliegenden Zeichnungen dargestellten Ausführungsbeispiele beschrieben.

Es zeigen
- Fig. 1: die kinematische Kette des ersten Roboters in der Ansicht von oben,
- Fig. 2: die kinematische Kette des ersten Roboters in der Ansicht von der Seite,
- Fig. 3: die Bewegungen einzelner Glieder des ersten Roboters während des Verweilens des Effektordrehpunktes in Ruhelage in der Ansicht von oben,
- Fig. 4: das Momentenschaubild der Drehmomente an der der ersten, zweiten und dritten Drehachse während der verkürzten Nullraumbewegung in der ersten Ruheposition,
- Fig. 5: das Momentenschaubild der Drehmomente an der der ersten, zweiten und dritten Drehachse während der verkürzten Nullraumbewegung in der zweiten Ruheposition,
- Fig. 6: Darstellung des gestreckten Innenschwungs in der Ansicht von oben,
- Fig. 7: Positionsschaubild der beiden Nullraumbewegungen in den Ruhepositionen bei begrenzter Nullraumbewegung,
- Fig. 8: Momentenschaubild der ersten Nullraumbewegung bei begrenztem Drehmoment an der zweiten Drehachse,
- Fig. 9: Momentenschaubild der zweiten Nullraumbewegung bei begrenztem Drehmoment an der zweiten Drehachse,
- Fig. 10: Positionsschaubild des Außenschwungs,
- Fig. 11: Momentenschaubild des Außenschwungs,
- Fig. 12: an vierte Drehachse angeschlossene zwei Endeffektoren
und
- Fig. 13: Translationsroboter (für sich allein betrachtet nicht Teil der Erfindung) in der Ansicht von der Seite.

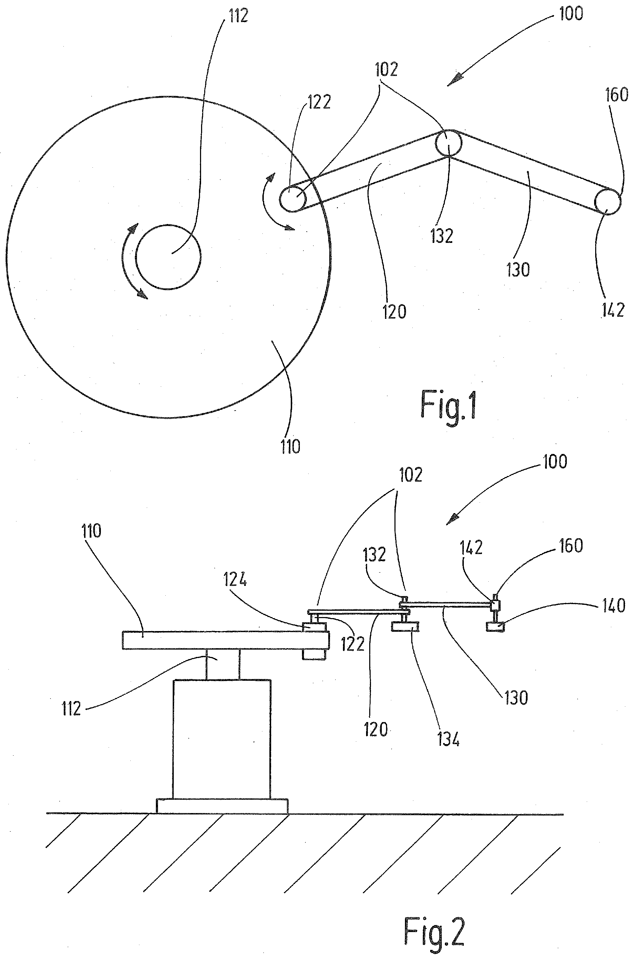

In den Figuren 1 und 2 ist der erste Roboter dargestellt, der ein um eine erste Drehachse 112 drehbares Kurbelglied 110 aufweist. Mittels eines Drehgelenkes 102 ist an einer zweiten Drehachse 122 ein erstes Koppelglied 120 angeschlossen. An der der zweiten Drehachse 122 gegenüberliegenden Seite weist das erste Koppelglied 120 an einem weiteren Drehgelenk 102 eine dritte Drehachse 132 auf, an die drehgelenkig ein zweites Koppelglied 130 angeschlossen ist. Am Ende des zweiten Koppelgliedes 130 ist eine vierte Drehachse 142 vorgesehen, die dem Effektordrehpunkt 160 entspricht. An diesem Effektordrehpunkt kann, wie später noch beschrieben wird, ein drittes Koppelglied und/oder ein viertes Koppelglied angeschlossen werden. Insbesondere aus Fig. 2 ist ersichtlich, dass an der zweiten Drehachse 122 ein Antrieb 124 angeordnet ist und an der dritten Drehachse 132 ein Antrieb 134 angeordnet ist. Mittels dieser Antriebe lassen sich die Koppelglieder 120 und 130 unabhängig von den durch die Rotation des Kurbelgliedes 110 verursachten Bewegungen antreiben. In Fig. 2 ist am Ende des zweiten Koppelgliedes 130 an den Effektordrehpunkt 160 ein drittes Koppelglied 140 angeschlossen, welches jedoch nicht die in Fig. 2 dargestellte Ausgestaltung aufweisen muss, sondern eine Auskragung haben kann, die eine Schwenkbewegung des dritten Koppelgliedes 140 um den Effektordrehpunkt 160 bewirken kann.

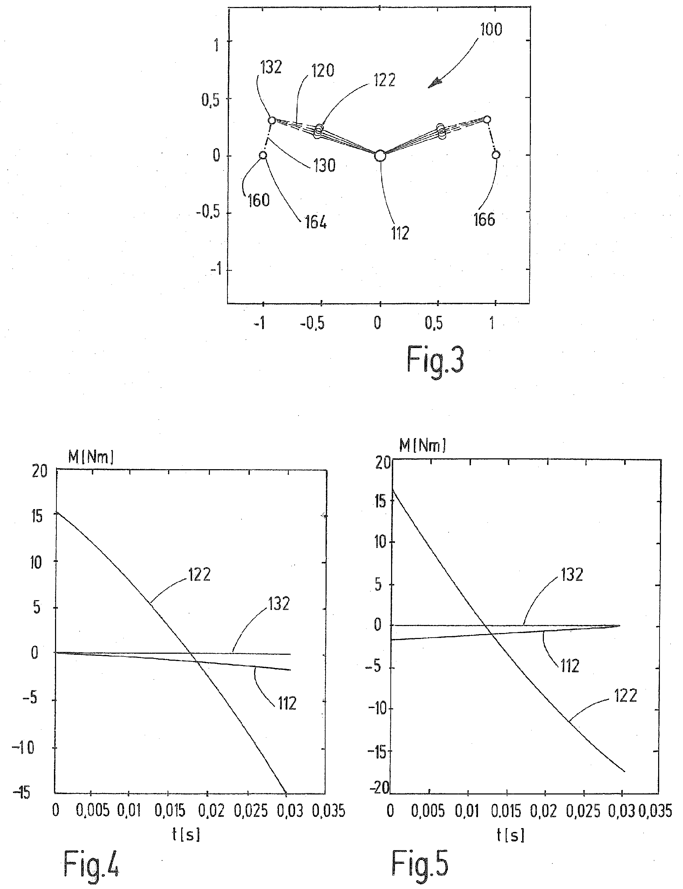

In Fig. 3 ist eine Nullraumbewegung des ersten Roboters 100 dargestellt, wie sie ansatzweise bereits in der Erläuterung des einschlägigen Standes der Technik beschrieben wurde. Erkennbar ist, dass der Effektordrehpunkt 160 zwei Ruhepositionen während der Bewegung des Kurbelgliedes 110 und der Koppelglieder 120 und 130 aufweisen kann, nämlich die erste Ruheposition 164 und die zweite Ruheposition 166, die sich in Bezug auf die erste Drehachse 112 im Wesentlichen gegenüberliegen. Diese Ruhepositionen 164 und 166 werden vom Effektordrehpunkt 160 eingenommen, während sich das Kurbelglied 110 dreht und zumindest das erste Koppelglied 120 eine Schwenkbewegung ausführt, wie sie in Fig. 3 angedeutet ist.

Die Ruhepositionen 164 und 166 werden dabei relativ lange aufrechterhalten. Für einen zeitoptimierten Transport- bzw. Beschickungsprozess sind jedoch kürzere Verweilzeiten gewünscht. Demzufolge muss der Effektordrehpunkt 160 nach Erreichung der ersten bzw. zweiten Ruheposition 164, 166 diese schneller wieder verlassen. Das heißt, dass nicht eine übliche Nullraumbewegung (Bewegung der Glieder des Roboters während der Ruhelage des Effektordrehpunktes) realisiert werden soll, sondern eine verkürzte Nullraumbewegung. Erfindungsgemäß sollen während dieser verkürzten Nullraumbewegung, das heißt zur Realisierung verkürzter Verweilzeiten in den Ruhepositionen 164 und 166, Momente mit den Antrieben an den Drehachsen erzeugt werden, die einen effizienten Betrieb des ersten Roboters ermöglichen.

Aus den Fig. 4 und 5 sind die Momentenverläufe ersichtlich, die von Antrieben an der ersten Drehachse 112, an der zweiten Drehachse 122 und an der dritten Drehachse 132 für eine auf 0,03 Sekunden verkürzte Nullraumbewegung realisiert werden müssen. Dabei sind an die jeweiligen in den Fig. 4 und 5 dargestellten Funktionen die Bezugszeichen der jeweiligen Drehachse angetragen. Fig. 4 zeigt dabei die Momentenverläufe für die Drehachsen 112, 122 und 132 in der ersten Ruheposition 164 und Fig. 5 zeigt die Momentenverläufe für die zweite Ruheposition 166.

Das in den Fig. 4 und 5 dargestellte Drehmoment an der zweiten Drehachse 122 beträgt erfindungsgemäß lediglich maximal 5% des Drehmomentes, welches zur Realisierung eines Verweilens des Effektordrehpunktes mit ungekürzter Verweildauer notwendig wäre. Dadurch lässt sich die Rotation des ersten Roboters 100 mit Verweilen des Effektordrehpunktes 160 in der ersten Ruheposition 164 und in der zweiten Ruheposition 166 mit auf 0,03 Sekunden verkürzter Verweildauer bzw. verkürzter Nullraumbewegung realisieren.

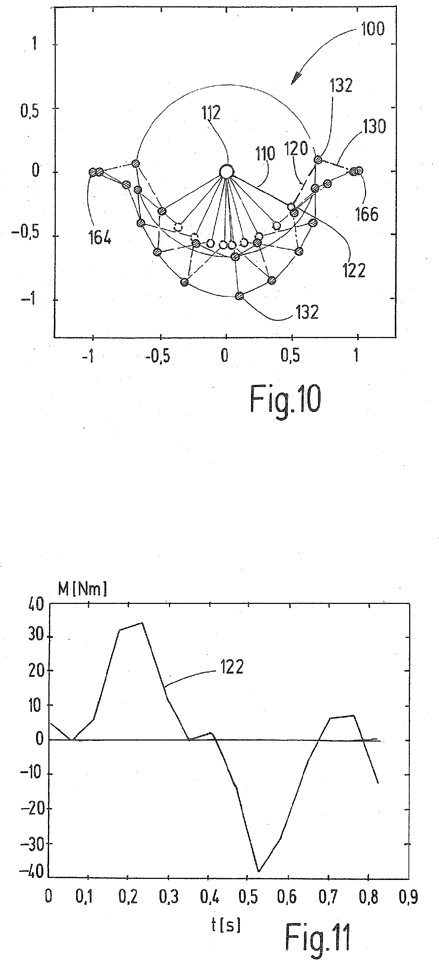

Dadurch, dass der erste Roboter durch die Verkürzung der Verweildauer in den Ruhepositionen 164, 166 nicht den Bewegungsablauf durchführen kann, den er bei ungekürzter Verweildauer mit geringst möglicher Energiezufuhr realisieren würde, ist auch ein Außenschwung, wie er in Fig. 10 angedeutet ist, nicht energieeffizient zu erreichen. Ein solcher Außenschwung hat außerdem den Nachteil eines relativ großen Raumbedarfs.

Deshalb wird erfindungsgemäß der Effektordrehpunkt 160 derart von der ersten Ruheposition 164 in die zweite Ruheposition 166 geschwenkt, dass er über weite Strecken eine nahezu lineare Bewegung ausführt. Diese Bewegung wird auch als gestreckter Innenschwung 170 bezeichnet. Beim gestreckten Innenschwung 170 wird im Verlauf der Bahnbewegung wie beim Außenschwung das erste und das zweite Koppelglied 120 und 130 relativ zueinander gestreckt, jedoch das Kurbelglied 110 und das erste Koppelglied 120 in einen Winkel zueinander gestellt, wohingegen sie beim Außenschwung ebenfalls gestreckt werden. Hierdurch kann der Endeffektor 162, der am Effektordrehpunkt 160 angeordnet ist, nahe an der Ideallinie zwischen der ersten Ruheposition 164 und der zweiten Ruheposition 166 entlang bewegt werden. Die zurückgelegte Strecke des Endeffektors 160 wird dadurch minimiert. Je kürzer die Strecke ist, umso geringer müssen die Beschleunigungen sein, um in einem vorgegebenen Zeitfenster von der ersten Ruheposition 164 zur zweiten Ruheposition 166 zu gelangen.

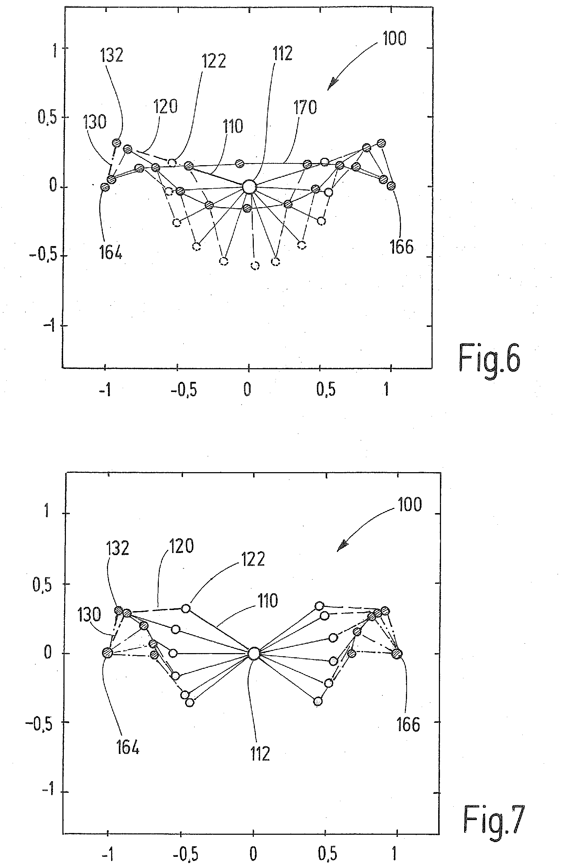

In Fig. 7 ist der Bewegungsablauf des ersten Roboters dargestellt, bei dem das Drehmoment an der zweiten Drehachse 122 zwecks Vermeidung von Überlastung des Antriebes an der zweiten Drehachse auf einen bestimmten Wert, z. B. auf 170 Nm, begrenzt ist. Dies ist notwendig, um zu vermeiden, dass durch gestreckte Lagen der Koppelglieder theoretisch unendlich große Drehmomente zu erzeugen sind.

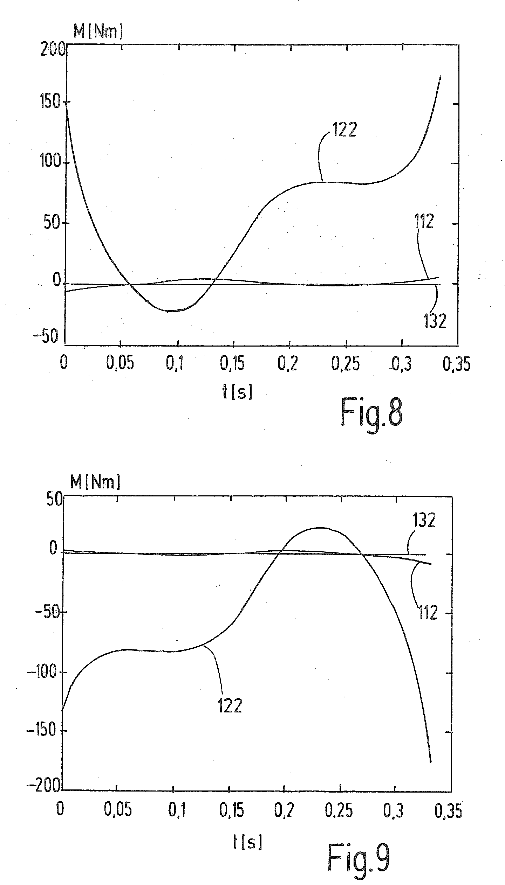

In den Fig. 8 und 9 ist dabei der jeweilige Momentenverlauf an der zweiten Drehachse 122 in der ersten Ruheposition 164 (Fig. 8) sowie in der zweiten Ruheposition 166 (Fig. 9) dargestellt. Deutlich ersichtlich ist, dass der Momentenverlauf vor Erreichung der jeweiligen Ruhepositionen, beim Verweilen in den jeweiligen Ruhepositionen sowie nach den Ruhepositionen ein Drehmoment von 170 Nm an der zweiten Drehachse 122 nicht überschreitet.

Zur Veranschaulichung der Effizienz des Innenschwungs ist in Fig. 10 ein Positionsschaubild des Außenschwungs dargestellt, bei dem ersichtlich ist, dass wesentlich mehr Raumbedarf bei einer derartigen Bewegung besteht gegenüber des in Fig. 6 dargestellten gestreckten Innenschwungs.

In Fig. 11 ist ersichtlich, dass an der zweiten Drehachse 122 über einen wesentlich längeren Zeitraum ein relativ großes Drehmoment aufzubringen ist.

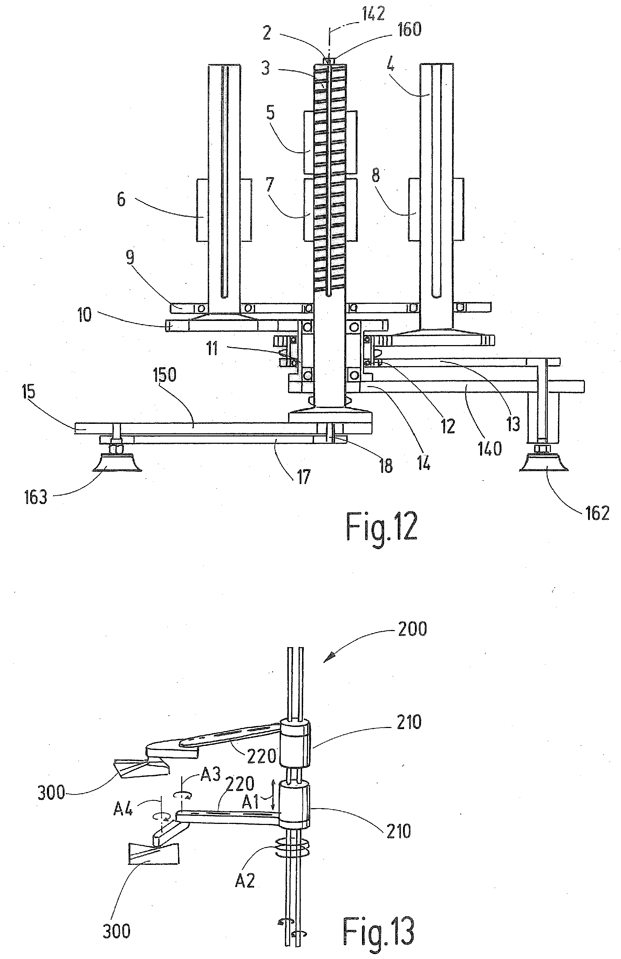

Zur Erläuterung der konstruktiven Endeffektorausgestaltung am ersten Roboter wird auf Fig. 12 verwiesen. An die in Fig. 1 deutlich ersichtliche vierte Drehachse 142 bzw. an den dortigen Effektordrehpunkt 160 sind über Wellen ein drittes Koppelglied 140 sowie ein viertes Koppelglied 150 angeschlossen, wobei am dritten Koppelglied 140 ein erster Endeffektor 162 angeschlossen ist und am vierten Koppelglied 150 ein zweiter Endeffektor 163 angeschlossen ist. Über die Gewindewelle 3 kann das daran gekoppelte vierte Koppelglied 150 rotatorisch bewegt werden. Das vierte Koppelglied 150 ist durch den exzentrischen Arm 15 ausgebildet. Über eine Nutmutter 7 erfolgt dabei der rotatorische Antrieb der Gewindewelle 3. Die Gewindewelle 3 ist dabei auch mit einer Gewindemutter 5 in Eingriff, die eine translatorische Bewegung der Gewindewelle 3 in der vierten Drehachse 142 realisieren kann. In der Gewindewelle 3 ist eine Welle 2 geführt, an deren Wellenende 18 ein Riementrieb 17 gekoppelt ist, welcher mit dem zweiten Endeffektor 163 in Wirkverbindung steht, so dass bei Drehung der Welle 2 über den Riementrieb 17 auch der zweite Endeffektor 163 gedreht werden kann, um Transportgut zu drehen.

Auf der Gewindewelle 3 ist eine Hohlwelle 11 drehbar gelagert, an die ein exzentrischer Arm 14, der das dritte Koppelglied 140 ausbildet, angeschlossen ist. An dieses dritte Koppelglied 140 ist der erste Endeffektor 162 drehbar angeschlossen. Der erste Endeffektor 162 steht dabei mit einem Riementrieb 13 in Eingriff, der wiederum mit einer auf der Hohlwelle 11 gelagerten Hohlwelle 12 in Eingriff steht. Diese Hohlwelle 12 kämmt mit einem Zahnrad, welches auf einer Nutwelle 4 angeordnet ist. Diese Nutwelle 4 ist durch eine Nutmutter 8 antreibbar. Durch Betätigung der Nutmutter 8 wird die Nutwelle 4 in Rotation versetzt und treibt somit die Hohlwelle 12 an, die wiederum den Riementrieb 13 antreibt, der den ersten Endeffektor 162 antreibt. Die Drehbewegung des dritten Koppelgliedes 140 bzw. dessen exzentrischen Arms 14 wiederum wird durch Kämmung eines Zahnrades 10 mit der Hohlwelle 11 erreicht, wobei das Zahnrad 10 auf einer Nutwelle 1 gelagert ist, welche durch eine Nutmutter 6 antreibbar ist. Die Nutwelle 1 sowie die Nutwelle 4 ragen dabei durch ein Gehäuse 9 hindurch.

Somit kann jeder der Endeffektoren 162, 163 in der Phase der Beschleunigung des Effektordrehpunktes 160 derart bewegt werden, dass der jeweilige Endeffektor 162, 163 insbesondere beim Start bzw. bei der Beendigung des Bewegungsvorganges eine geringere Beschleunigung erhält als der Effektordrehpunkt 160. Dies wird dadurch erreicht, dass aus einer anfänglichen winkligen Position des dritten Koppelgliedes 140 bzw. des vierten Koppelgliedes 150 in Bezug zum zweiten Koppelglied 130 bei der Bewegung des Effektordrehpunktes 160 eine gestreckte Lage zum zweiten Koppelglied 130 erzeugt wird, so dass das zweite Koppelglied 130 sowie das dritte Koppelglied 140 bzw. das vierte Koppelglied 150 im Wesentlichen tangential zur jeweiligen Bewegungsbahn ausgerichtet sind. Dies verringert die mechanische Belastung der Endeffektoren 162, 163 sowie die Haltekraft, die notwendig ist, um das jeweilige Transportgut durch die Endeffektoren an diesen während der Bewegung des Effektordrehpunktes 160 zu fixieren.

In Fig. 13 ist ein Translationsroboter 200 (für sich allein betrachtet nicht Teil der Erfindung) dargestellt, der im System zusammen mit dem ersten Roboter 100 verwendet werden soll. Dieser Translationsroboter 200 umfasst ein Kurbelglied 210, welches um eine erste Drehachse A2 drehbar ist. Drehgelenkig an das Kurbelglied 210 ist ein erstes Koppelglied 220 angeschlossen, an dessen zweiter Drehachse A3 ein zweites Koppelglied 230 drehbar angeordnet ist. In einer am zweiten Koppelglied 230 angeordneten dritten Drehachse A4 ist der Endeffektor 300 des Translationsroboters 200 angeschlossen. Der Translationsroboter 200 kann dabei derart ausgestaltet sein, dass sein Kurbelglied 210 in dem translatorischen Freiheitsgrad A1, nämlich entlang der ersten Drehachse A2, verschoben werden kann. Außerdem kann der Translationsroboter 200 mehrere übereinander angeordnete Gliederketten aufweisen, die das Kurbelglied 210, das erste Koppelglied 220 sowie das zweite Koppelglied 230 umfassen. Dieser Translationsroboter ist insbesondere zur Beschickung von Regalen geeignet. Seine Positioniergenauigkeit ist jedoch mit vertretbarem Ausstattungsaufwand nur relativ gering.

Der erste Roboter weist in Zielgebieten, in denen sich die jeweiligen Ruhepositionen 164 und 166 befinden, eine relativ hohe Positioniergenauigkeit auf. Außerhalb der Zielgebiete ist jedoch die Positioniergenauigkeit relativ gering. Durch eine Positionsermittlungseinrichtung bzw. eine Steuereinrichtung, mit der Positionen des Endeffektors 300 des Translationsroboters200 sehr genau feststellbar sind, wird ein optimales Zusammenwirken des ersten Roboters 100 und des Translationsroboters 200 erreicht. Mittels des Translationsroboters lässt sich Transportgut mit ausreichender Genauigkeit im Zielgebiet des ersten Roboters 100 platzieren. Mittels der Positionsermittlungseinrichtung wird dem ersten Roboter die exakte Position des durch den Translationsroboter 200 abgelegten Transportgutes mitgeteilt. Dadurch, dass sich das Transportgut im Zielgebiet des ersten Roboters 100 befindet, kann dieser die Position des Transportgutes sehr genau anfahren und das Transportgut aufnehmen. Selbstverständlich ist auch der umgekehrte Bewegungsablauf möglich, bei dem mittels des ersten Roboters 100 das Transportgut im Zielgebiet abgelegt wird und vom Translationsroboter 200 aufgenommen wird. Durch die Möglichkeit der Bewegung des Kurbelgliedes 210 des Translationsroboters 200 im translatorischen Freiheitsgrad A1 und somit in senkrechter Richtung sind eine Vielzahl von Bewegungsabläufen durch die Kombination der beiden Roboter 100 und 200 realisierbar.

**Bezugszeichenliste**

| | |
|---|---|
| Nutwelle | 1 |
| Welle | 2 |
| Gewindewelle | 3 |
| Nutwelle | 4 |
| Gewindemutter | 5 |
| Nutmutter | 6 |
| Nutmutter | 7 |
| Nutmutter | 8 |
| Gehäuse | 9 |
| Zahnrad | 10 |
| Hohlwelle | 11 |
| Hohlwelle | 12 |
| Riementrieb | 13 |
| Exzentrischer Arm | 14 |
| Exzentrischer Arm | 15 |
| Endeffektor | 16 |
| Riementrieb | 17 |
| Wellenende | 18 |
| Endeffektor | 19 |
| | |
| Erster Roboter | 100 |
| Drehgelenk | 102 |
| | |
| Kurbelglied | 110 |
| Erste Drehachse | 112 |
| | |
| Erstes Koppelglied | 120 |
| Zweite Drehachse | 122 |
| Antrieb an der zweiten Drehachse | 124 |
| | |
| Zweites Koppelglied | 130 |
| Dritte Drehachse | 132 |
| Antrieb an der dritten Drehachse | 134 |
| | |
| Drittes Koppelglied | 140 |
| Vierte Drehachse | 142 |
| | |
| Viertes Koppelglied | 150 |
| | |
| Effektordrehpunkt | 160 |
| erster Endeffektor | 162 |
| zweiter Endeffektor | 163 |
| | |
| Erste Ruheposition | 164 |
| Zweite Ruheposition | 166 |
| | |
| gestreckter Innenschwung | 170 |
| | |
| Translationsroboter | 200 |
| | |
| Kurbelglied | 210 |
| erste Drehachse | A2 |
| | |
| erstes Koppelglied | 220 |
| zweite Drehachse | A3 |
| | |
| zweites Koppelglied | 230 |
| | |
| Dritte Drehachse | A4 |
| translatorischer Freiheitsgrad | A1 |
| | |
| Endeffektor | 300 |

## Patentansprüche

1. Verfahren zum Betreiben eines Roboters (100), der eine Gliederkette mit wenigstens zwei Koppelgliedern (120, 130) umfasst, von denen ein erstes Koppelglied (120) an einem um eine erste Drehachse (112) drehbaren angetriebenen Kurbelglied (110) in einer zweiten Drehachse (122) drehgelenkig angeschlossen ist, und ein zweites Koppelglied (130) in einer dritten Drehachse (132) drehgelenkig an das erste Koppelglied (120) angeschlossen ist, wobei an der zweiten Drehachse (122) ein Antrieb (124) für das erste Koppelglied (120) angeordnet ist und das zweite Koppelglied (130) an seinem dem ersten Koppelglied (120) gegenüberliegenden Endbereich einen Effektordrehpunkt (160) aufweist,
wobei das Verfahren derart ausgestaltet ist,
dass das Kurbelglied (110) und das erste Koppelglied (120) derart angetrieben werden, dass der Effektordrehpunkt (160) während der Drehung des Kurbelgliedes (110) in einem bestimmten Winkelbereich in einer Ruheposition (164, 166) verweilt,
**dadurch gekennzeichnet,**
**dass** direkt nach Erreichen der Ruheposition (164, 166) durch den Effektordrehpunkt (160) zur Verkürzung der Verweilzeit des Effektordrehpunktes (160) in der Ruheposition (164, 166) mittels des Antriebs (124) an der zweiten Drehachse (122) ein Drehmoment auf das erste Koppelglied (120) aufgebracht wird, welches in der Zeitspanne der gewünschten Verweildauer maximal 5% des Drehmomentes beträgt, welches zur Realisierung eines Verweilens des Effektordrehpunktes (160) mit ungekürzter Verweildauer notwendig wäre.

2. Verfahren zum Betreiben des Roboters (100) nach Anspruch 1, wobei die Antriebe an der ersten Drehachse (122) und an der zweiten Drehachse (132) derart betrieben werden, dass der Effektordrehpunkt (160) von einer ersten Ruheposition (164) zu einer zweiten Ruheposition (166) bewegt wird, wobei der Effektordrehpunkt (160) und die dritte Drehachse (132) in wenigstens 80% ihrer jeweiligen Wegstrecke auf jeweils gegenüberliegenden Seiten einer theoretischen linearen Verbindung zwischen der ersten Ruheposition (164) und der zweiten Ruheposition (166) bewegt werden.

3. Verfahren zum Betreiben des Roboters (100) nach Anspruch 2, wobei zur Realisierung der Bewegung des Effektordrehpunktes (160) von der ersten Ruheposition (164) zur zweiten Ruheposition (166) auch ein Antrieb (134) an der dritten Drehachse (132) zur Bewegung des zweiten Koppelgliedes (130) angetrieben wird.

4. Verfahren zum Betreiben des Roboters nach einem der Ansprüche 2 und 3, bei dem am Effektordrehpunkt (160) drehbar in einer vierten Drehachse (142) ein drittes Koppelglied (140) angeschlossen ist, an dem ein Endeffektor (162, 163) angeordnet ist, wobei bei der Bewegung des Effektordrehpunktes (160) von der ersten Ruheposition (164) zur zweiten Ruheposition (166) der Endeffektor derart geschwenkt wird (162, 163), dass die Beschleunigung an einem Endbereich des Endeffektors (162, 163) geringer ist als die Beschleunigung des Effektordrehpunktes (160).

5. Roboter (100), umfassend eine Gliederkette mit wenigstens zwei Koppelgliedern (120, 130), von denen ein erstes Koppelglied (120) an einem um eine erste Drehachse (112) drehbaren angetriebenen Kurbelglied (110) in einer zweiten Drehachse (122) drehgelenkig angeschlossen ist, und ein zweites Koppelglied (130) in einer dritten Drehachse (132) drehgelenkig an das erste Koppelglied (120) angeschlossen ist, wobei an der zweiten Drehachse (122) ein Antrieb (124) für das erste Koppelglied (120) angeordnet ist und das zweite Koppelglied (130) an seinem dem ersten Koppelglied (120) gegenüberliegenden Endbereich einen Effektordrehpunkt (160) aufweist,
und wobei der Roboter (100) weiterhin eine Steuerungseinrichtung umfasst, mit der die Antriebe des Kurbelgliedes (110) und des ersten Koppelgliedes (120) derart steuerbar sind, dass der Effektordrehpunkt (160) während der Drehung des Kurbelgliedes (110) in einem bestimmten Winkelbereich in einer Ruheposition (164, 166) verweilt,
**dadurch gekennzeichnet,**
**dass** der Roboter (100) zur Durchführung des Verfahrens nach einem der vorhergehenden Ansprüche eingerichtet ist.

6. Roboter (100) nach Anspruch 5, bei dem am Effektordrehpunkt (160) drehbar in einer vierten Drehachse (142) ein drittes Koppelglied (140) angeschlossen ist, an dem ein erster Endeffektor (162) angeschlossen ist.

7. Roboter (100) nach Anspruch 6, bei dem am Effektordrehpunkt (160) drehbar in der vierten Drehachse (142) ein viertes Koppelglied (150) angeschlossen ist, an dem ein zweiter Endeffektor (163) angeordnet ist.

8. Roboter (100) nach Anspruch 7, bei dem das dritte Koppelglied (140) und das vierte Koppelglied (150) jeweils an koaxial zur vierten Drehachse (142) angeordneten Antriebswellen angeordnet sind.

9. Roboter (100) nach Anspruch 8, bei dem wenigstens einer der Endeffektoren (162, 163) an seinem Endbereich ein um eine Achse drehbares Handhabungsmittel aufweist, wobei dieses Handhabungsmittel mit einem Getriebe mit einer Antriebseinheit verbunden ist, dessen Antriebsachse parallel zur vierten Drehachse verläuft.

10. Roboter (100) nach einem der Ansprüche 8 und 9, dass zumindest eine der Antriebswellen axial verschiebbar ist.

11. Roboter (100) nach einem der Ansprüche 8 bis 10, dass der Roboter (100) zumindest ein Zahnradgetriebe umfasst, mit dem zumindest eine der Antriebswellen eines Endeffektors antreibbar ist.

## Claims

1. A method for operating a robot (100) that comprises a link arrangement having at least two coupling links (120, 130) of which a first coupling link (120) is connected in an articulated manner in a second axis of rotation (122) to a crank link (110) that is driven in a rotatable manner about a first axis of rotation (112), and a second coupling link (130) is connected in an articulated manner in a third axis of rotation (132) to the first coupling link (120), wherein a drive (124) for the first coupling link (120) is arranged on the second axis of rotation (122) and the second coupling link (130) comprises an effector pivot point (160) on its end region that lies opposite the first coupling link (120),
wherein the method is configured such
that the crank link (110) and the first coupling link (120) are driven such that the effector pivot point (160) remains in a resting position (164, 166) in a specific angular range while the crank link (110) is rotating,
**characterized in that**
immediately after the resting position (164, 166) is achieved, a torque is applied to the first coupling link (120) by means of the effector pivot point (160) so as to shorten the dwell time of the effector pivot point (160) in the resting position (164,166) by means of the drive (124) on the second axis of rotation (122), said torque amounting in the time span of the desired dwell duration to a maximum 5% of the torque that would be necessary in order to achieve a dwell time of the effector pivot point (160) that is of a shorter duration.

2. The method for operating a robot (100) according to Claim 1, wherein the drives on the first axis of rotation (122) and on the second axis of rotation (132) are operated such that the effector pivot point (160) is moved from a first resting position (164) to a second resting position (166), wherein the effector pivot point (160) and the third axis of rotation (132) are moved in at least 80% of their respective travel distance on respective opposite-lying sides of a theoretical linear connection between the first resting position (164) and the second resting position (166).

3. The method for operating a robot (100) according to Claim 2, wherein in order for the effector pivot point (160) to move from the first resting point (164) to the second resting position (166) a drive (134) on the third axis of rotation (132) is also driven so as to move the second coupling link (130).

4. The method for operating the robot according to any one of Claims 2 and 3, in which a third coupling link (140), on which an end effector (162,163) is arranged, is connected to the effector pivot point (160) in a rotatable manner in a fourth axis of rotation (142), wherein as the effector pivot point (160) moves from the first resting position (164) to the second resting position (166) the end effector is pivoted such (162, 163) that the acceleration at one end region of the end effector (162, 163) is less than the acceleration of the effector pivot point (160).

5. A robot (100), comprising a link arrangement having at least two coupling links (120, 130) of which a first coupling link (120) is connected in an articulated manner in a second axis of rotation (122) to a crank link (110) that is driven in a rotatable manner about a first axis of rotation (112), and a second coupling link (130) is connected in an articulated manner in a third axis of rotation (132) to the first coupling link (120), wherein a drive (124) for the first coupling link (120) is arranged on the second axis of rotation (122) and the second coupling link (130) comprises an effector pivot point (160) on its end region that lies opposite the first coupling link (120),
and wherein the robot (100) furthermore comprises a control unit with which the drives of the crank link (110) and of the first coupling link (120) may be controlled such that the effector pivot point (160) dwells in a resting position (164, 166) in a specific angular range while the crank link (110) is rotating,
**characterized in that**
the robot (100) is configured so as to perform the method according to any one of the preceding claims.

6. The robot (100) according to Claim 5, wherein a third coupling link (140), to which a first end effector is connected, is connected to the effector pivot point (160) in a rotatable manner in a fourth axis of rotation (142).

7. The robot (100) according to Claim 6, wherein a fourth coupling link (150), on which a second end effector (163) is connected, is connected to the effector pivot point (160) in a rotatable manner in the fourth axis of rotation (142).

8. The robot (100) according to Claim 7, wherein the third coupling link (140) and the fourth coupling link (150) are each arranged on drive shafts that are arranged in a coaxial manner with respect to the fourth axis of rotation (142).

9. The robot (100) according to Claim 8, wherein at least one of the end effectors (162, 163) comprises on its end region a handling device that is rotatable about an axis, wherein said handling device is connected to a gear mechanism that comprises a drive unit, said gear mechanism having a drive axis that extends in parallel with the fourth axis of rotation.

10. The robot (100) according to any one of Claims 8 and 9, **characterized in that** at least one of the drive shafts is axially displaceable.

11. The robot (100) according to any one of Claims 8 to 10, **characterized in that** the robot (100) comprises at least one gear drive with which it is possible to drive at least one of the drive shafts of an end effector.

## Revendications

1. Procédé de fonctionnement d'un robot (100) comprenant une chaîne articulée avec au moins deux éléments d'accouplement (120, 130), dont un premier élément d'accouplement (120) est raccordé de manière pivotante autour d'un deuxième axe de rotation (122) à un élément de vilebrequin (110) entraîné en rotation autour d'un premier axe de rotation (112), et un deuxième élément d'accouplement (130) est raccordé de manière pivotante au premier élément d'accouplement (120) autour d'un troisième axe de rotation (132), un entraînement (124) pour le premier élément d'accouplement (120) étant monté sur le deuxième axe de rotation (122) et le deuxième élément d'accouplement (130) présentant un pivot d'effecteur (160) dans sa partie d'extrémité opposée au premier élément d'accouplement (120),
ledit procédé étant prévu de telle manière
que l'élément de vilebrequin (110) et le premier élément d'accouplement (120) sont entraînés de sorte que le pivot d'effecteur (160) demeure dans une position de repos (164, 166) pendant la rotation de l'élément de vilebrequin (110) dans une plage angulaire définie,
**caractérisé**
**en ce qu'**un couple est appliqué sur le premier élément d'accouplement (120) au moyen de l'entraînement (124) sur le deuxième axe de rotation (122), dès que la position de repos (164, 166) est atteinte par le pivot d'effecteur (160), pour réduire le temps de maintien du pivot d'effecteur (160) dans la position de repos (164, 166), ledit couple représentant pendant la durée de maintien souhaitée au maximum 5 % du couple maximal qui serait exigé pour réaliser un maintien du pivot d'effecteur (160) avec une durée de maintien non réduite.

2. Procédé de fonctionnement du robot (100) selon la revendication 1, où les entraînements sur le premier axe de rotation (122) et sur le deuxième axe de rotation (132) sont actionnés de sorte que le pivot d'effecteur (160) est déplacé d'une première position de repos (164) vers une deuxième position de repos (166), le pivot d'effecteur (160) et le troisième axe de rotation (132) étant déplacés sur au moins 80 % de leur parcours respectif vers des côtés opposés d'une liaison théoriquement linéaire entre la première position de repos (164) et la deuxième position de repos (166).

3. Procédé de fonctionnement du robot (100) selon la revendication 2, où pour réaliser le déplacement du pivot d'effecteur (160) de la première position de repos (164) vers la deuxième position de repos (166), un entraînement (134) est également actionné sur le troisième axe de rotation (132) pour le déplacement du deuxième élément d'accouplement (130).

4. Procédé de fonctionnement du robot selon la revendication 2 ou la revendication 3, où un troisième élément d'accouplement (140) sur lequel est monté un effecteur terminal (162, 163) est raccordé au pivot d'effecteur (160) de manière pivotante autour d'un quatrième axe de rotation (142), l'effecteur terminal étant pivoté (162, 163) lors du déplacement du pivot d'effecteur (160) de la première position de repos (164) à la deuxième position de repos (166), de telle manière que l'accélération dans une partie d'extrémité de l'effecteur terminal (162, 163) est inférieure à l'accélération du pivot d'effecteur (160).

5. Robot (100), comprenant une chaîne articulée avec au moins deux éléments d'accouplement (120, 130), dont un premier élément d'accouplement (120) est raccordé de manière pivotante autour d'un deuxième axe de rotation (122) à un élément de vilebrequin (110) entraîné en rotation autour d'un premier axe de rotation (112), et un deuxième élément d'accouplement (130) est raccordé de manière pivotante au premier élément d'accouplement (120) autour d'un troisième axe de rotation (132), un entraînement (124) pour le premier élément d'accouplement (120) étant monté sur le deuxième axe de rotation (122) et le deuxième élément d'accouplement (130) présentant un pivot d'effecteur (160) dans sa partie d'extrémité opposée au premier élément d'accouplement (120),
ledit robot (100) comprenant en outre un dispositif de commande permettant de commander les entraînements de l'élément de vilebrequin (110) et du premier élément d'accouplement (120), de sorte que le pivot d'effecteur (160) demeure dans une position de repos (164, 166) pendant la rotation de l'élément de vilebrequin (110) dans une plage angulaire définie,
**caractérisé**
**en ce que** ledit robot (100) est prévu pour exécuter le procédé selon l'une quelconque des revendications précédentes.

6. Robot (100) selon la revendication 5, où un troisième élément d'accouplement (140) auquel est raccordé un premier effecteur terminal (162) est raccordé au pivot d'effecteur (160) de manière pivotante autour d'un quatrième axe de rotation (142).

7. Robot (100) selon la revendication 6, où un quatrième élément d'accouplement (150) auquel est raccordé un deuxième effecteur terminal (163) est raccordé au pivot d'effecteur (160) de manière pivotante autour du quatrième axe de rotation (142).

8. Robot (100) selon la revendication 7, où le troisième élément d'accouplement (140) et le quatrième élément d'accouplement (150) sont montés sur des arbres d'entraînement respectifs coaxiaux au quatrième axe de rotation (142).

9. Robot (100) selon la revendication 8, où au moins un des effecteurs terminaux (162, 163) présente dans sa partie d'extrémité un moyen d'actionnement rotatif autour d'un axe, ledit moyen d'actionnement étant relié à un engrenage avec une unité d'entraînement dont l'axe d'entraînement s'étend parallèlement au quatrième axe de rotation.

10. Robot (100) selon la revendication 8 ou la revendication 9, où au moins un des arbres d'entraînement est déplaçable axialement.

11. Robot (100) selon l'une quelconque des revendications 8 à 10, où ledit robot (100) comprend au moins une transmission par engrenage permettant l'actionnement d'au moins un des arbres d'entraînement d'un effecteur terminal.
